# EUROPEAN PATENT APPLICATION

(11) **EP 3 124 208 A1**
(43) Date of publication of application: **01.02.2017**
(21) Application number: 15400036.8
(22) Date of filing: 31.07.2015
(51) Int. Cl.: B29C 65/48

(54) **METHOD FOR JOINING THERMOSET COMPONENTS**

(71) Applicant: AIRBUS HELICOPTERS DEUTSCHLAND GmbH, 86609 Donauwörth (DE)
(72) Inventor: Weiland, Frank, 81541 Munich (DE); Beier, Uwe, 85635 Höhenkirchen (DE)
(74) Representative: GPI & Associés

(57) **Abstract**

A method for joining one or more first-type thermoset components (1) to a second-type thermoset component (2), each first-type thermoset component (1) being manufactured by providing an uncured starting thermoset component (11) on which a thermoplastic material layer (3) is placed, such that an interpenetrating network (21) forms between the thermoset polymer (11) of the starting thermoset component (1) and the corresponding thermoplastic material layer (3) when each first-type thermoset component (1) is cured; and each first-type thermoset component (1) being then placed on an uncured second-type thermoset component (2) so that when the latter is cured, a further interpenetrating network (22) forms between each thermoplastic material layer (3) and the thermoset polymer of the second-type thermoset component (2); this results in a strong joint between the first-type (1) and the second-type (2) thermoset components.

## Description

The present invention relates to the field of methods for joining parts made of thermoset material by using a thermoplastic material.

Many structures being at least partially made of thermoset polymers are in turn formed by various substructures that need to be joined. Several techniques for attaching these substructures are well-known in the art.

One of these techniques is the mechanical fastening by means of screws, rivets, bolts or the like. Several drawbacks are usually associated to joints of this kind - excess of weight, problems with stress concentrations and fibre breakage resulting from hole drilling, expensive maintenance and difficulty to control the state of the joints, among others.

Likewise, adhesion bonding is disadvantageous in that it may entail a thorough surface preparation and long curing times. Moreover, adhesive-based processes are not certified for aerospace structural joints yet, mostly due to the risk of undetected weak bonds between the parts.

A further alternative, suitable for thermoset composite materials, consists in co-curing the thermoset substructures in a one-shot process. However, co-curing normally requires dedicated, expensive tooling and the quality of the final structure depends on each substructure - should one of the substructures present defaults, the whole structure cannot be used. Therefore, the method risks being insufficient in terms of quality assurance and cost and efficiency of manufacturing.

Welding is another alternative to join thermoset polymers or thermoset polymer composites. This method necessitates one or more thermoplastic films interposed between the thermoset components so as to give rise to interfaces between the thermoplastic and the thermoset materials -or between two thermoplastic materials- which eventually bond these thermoset components.

Welding joints are beneficial in comparison with the above-explained procedures - since the bond results from the entanglement of chemical species, the quality problems are less frequent than in an adhesive bonding, based on interactions like the Van der Waals force. Moreover, as the thermoplastic material can be reversibly melted, welding may allow for an easy replacement of the joined components.

Several prior art documents describe welding processes in which a thermoplastic component and a thermoset component, or two thermoplastic components, are adhered through a network formed between them when the process is carried out.

Journal article S. Deng et al., published in the magazine Composites: Part A, edited by Elsevier, offers a review on this matter by explaining different ways to perform the mentioned attachments. The article focuses on fusion bonding methods, according to which thermoplastic materials are joined under the application of a sufficient amount of heat and pressure, which provokes the interdiffusion of molecular chains across the interfaces of the material. Particularly, it discloses a process for joining two thermoset composite components in which each one of these components is first joined to a thermoplastic layer during its curing by means of fusion bonding, so that a thermoplastic surface is formed on each thermoset component. Then, the two thermoplastic surfaces are brought into contact and adhered with a further fusion bonding joint, thus attaching the thermoset components. Accordingly, this joint consists of three interfaces - two between a thermoplastic and a thermoset material and another between the thermoplastic layers.

Document US 2009/0246548 describes a process for joining a semi-crystalline or crystalline thermoplastic polymer to a thermoset component, which can be a pure thermoset polymer or a thermoset composite. The resulting pieces can then be bonded by their filmed surfaces, which are placed in intimate contact with respect to one another and heated above the melting temperatures of the semi-crystalline thermoplastic surfaces to allow for a fusion bonding. Therefore, as in the process of the previous paragraph, the final component depends on a joint between thermoplastic materials. Besides, in order to make the fusion welding of the thermoplastics possible, a heat platen or another heating element is necessary for permitting heat to be focused on the welding line of the pieces to be bonded.

Document WO 2014/088704 A2 discloses a process for joining two stacks of uncured thermoset composite components by providing an amorphous thermoplastic layer between the stacks and by curing the stacks at a temperature above the glass transition temperature of the amorphous thermoplastic layer so that the rubbery thermoplastic layer fuses with the viscous thermoset resin. In order to assist in this fusion process, consolidating pressure should be applied. Since both components are uncured before being brought into contact with the thermoplastic layer and the curing takes place in only one shot, the manufacture of the final component presents the difficulty of dealing with the instability of the thermoset components before curing, which may lead to problems of tolerance and quality assurance.

Document DE102010007824 also proposes a method for joining thermoset components. These components are coated in one of their surfaces with a thermoplastic layer with which they form an interpenetrating network. After that, an additional thermoplastic component is interposed between the filmed surfaces and heat is applied to give rise to a fusion welding joint between the thermoplastic materials.

The present inventions aims at providing a method of joining thermoset components wherein the strength of the final assembly is given by the resistance of the interpenetrating network formed between a thermoplastic and a thermoset component, wherein only one element is cured at a time in order to have a better control of the quality of the process, and wherein the process may take place at a wide range of temperatures, including those under the glass transition temperature of the thermoplastic material. To achieve so, this method comprises the steps of:
- providing at least one first-type thermoset component, each at least one first-type thermoset component being manufactured by:
   o providing a starting thermoset component, the starting thermoset component being uncured,
   o placing a thermoplastic material layer on a surface of the starting thermoset component, the thermoplastic material layer having a thermoplastic glass transition temperature,
   o curing the starting thermoset component at a first-type curing temperature, thus giving rise to the first-type thermoset component having, once cured, a filmed surface coated with the thermoplastic material layer, the thermoplastic material layer being joined to the first-type thermoset component by means of a first-type interpenetrating network;
- providing a second-type thermoset component, the second-type thermoset component being uncured;
- placing the filmed surface of each at least one first-type thermoset component on the second-type thermoset component;
- curing the second-type thermoset component at a second-type curing temperature, so that a second-type interpenetrating network is created between the second-type thermoset component and each at least one thermoplastic material layer, thereby joining each at least one first-type thermoset component with the second-type thermoset component.

The terms "thermoset component" or "thermoplastic component" are construed as including both pure polymer thermoset or thermoplastic materials and composite materials having as matrix a thermoset or thermoplastic material. Therefore, then the term "curing a thermoset component" refers to the curing of the thermoset polymer (either pure or forming part of the composite material).

During the first step of this process, by means of which the at least one first-type thermoset component is obtained, an interpenetrating network, referred to as first-type interpenetrating network, is created between the thermoset polymer of the starting thermoset component and the thermoplastic material of the thermoplastic material layer when the thermoset polymer is cured. One or more first-type thermoset components can be manufactured this way. Although, in a preferred embodiment, a complete curing of the starting thermoset component is achieved, the process is also plausible with a partial curing during this first step, as long as such partial curing already gives enough structural stability to the at least one first-type thermoset component before performing the subsequent steps.

The second-type thermoset component to which the one or more first-type thermoset components will be joined is uncured. Hence, in the final step, only one component is cured, which has the following advantages relative to the other alternatives. If all the elements are uncured, the process is considerably more complicated and it is prone to suffer manufacturing deficiencies; if all the elements are cured, the final step bonding cannot be the result of the interpenetrating network forming between a thermoset and a thermoplastic component when the former cures - it is instead a fusion welding joint between thermoplastic materials, which would additionally require that the second-type thermoset component is also filmed with a thermoplastic layer before such final step. Furthermore, the fact that one of the components -the second-type thermoset component- is uncured before taking the final step reduces the tolerance requirements of the cured first-type thermoset components, as possible superficial irregularities or deformations in such cured components can be levelled during the formation of the strong interface with the second-type thermoset component.

In order to carry out the final step, the at least one first-type thermoset component is placed on the second-type thermoset component with the filmed surface, coated with the thermoplastic material layer, on a surface of the uncured second-type thermoset component. When this second-type thermoset component is cured, a further interpenetrating network, referred to as second-type interpenetrating network, is formed between the thermoset polymer of the second-type thermoset component and the thermoplastic material of the thermoplastic material layer. Since, as explained above, this layer is bonded to the at least one first-type thermoset component by a first-type interpenetrating network, the thermoset components are attached strongly enough to withstand, among others, the loads typical of aircraft structures. Besides, the process is advantageously simple and faster, because the second-type thermoset component need not be coated with thermoplastic and only one thermoset component is cured at the same time. This also implies that the process is more reliable in terms of quality control.

In an embodiment, the first-type curing temperature is, during the manufacturing of each at least one first-type thermoset component, less than the thermoplastic glass transition temperature of the thermoplastic material layer, and the second-type curing temperature is also less than the thermoplastic glass transition temperature of each at least one thermoplastic material layer.

The values of the glass transition temperatures are measured, in the present invention, by differential scanning calorimetry (DSC) according to the standardisation ASD-STAN prEN 6041. In any case, the limitation of this embodiment can similarly be expressed by stating that the first-type curing temperature is such that the corresponding thermoplastic material layer is always in a glassy phase during the curing process of each at least one first-type thermoset component, and the second-type curing temperature is such that each at least one thermoplastic material layer is always in a glassy phase during the curing process of the second-type thermoset component. In other words, the thermoplastic materials do not reach the liquid or rubbery phase. Therefore, the formation of the first-type and second-type interpenetrating networks of this embodiment occurs through a process of diffusion bonding across the solid surfaces of the at least one thermoplastic material layer.

In other embodiments, the glass transition temperature of one or more of the at least one thermoplastic material layer is surpassed.

A composite material can be defined as an arrangement formed by a matrix and a reinforcement, which when combined have properties superior to those of the individual components. The at least one first-type thermoset component and/or the second-type thermoset component may be composite materials formed by a matrix of thermoset polymer resin and a reinforcement such as fibres. In an example, the at least one first-type thermoset component and/or the second-type thermoset component are composite materials having carbon fibre as reinforcement.

In a further example, the starting thermoset component of the at least one first-type thermoset component and/or the uncured second-type thermoset component can be composite materials provided in form of uncured pre-preg. A pre-preg is made of preimpregnated fibres embedded in a matrix material to be cured during the final manufacture of the structure.

In an alternative embodiment to that of the previous paragraph, the starting thermoset component of the at least one first-type thermoset component and/or the uncured second-type thermoset component are composite materials manufactured by using liquid composite moulding, which consists in the resin infiltration -in the case of the present invention, the resin is a thermoset polymer- of a textile preform by either positive or negative pressure. Some well-known examples of this technique are resin transfer molding (RTM), vacuum assisted resin transfer molding (VARTM), vacuum assisted resin infusion (VARI) and vacuum assisted processing (VAP).

The thermoplastic material, in turn, can be an amorphous thermoplastic, e.g. polyetherimide(PEI), polysulfone (PSU), polyether sulfone (PES), Poly(methyl methacrylate) (PMMA) or polycarbonate (PC). The use of amorphous thermoplastic material is particularly convenient when the joint is obtained by way of diffusion welding. In fusion welding, the glass transition temperature of the amorphous thermoplastic material must normally be exceeded by at least 50°C, and such temperatures can also exceed the glass transition temperature of the thermoset components, even when completely cured, which leads to reduced stiffness, dimensional instability or degradation of the components. Such inconveniencies are avoided in a diffusion welding process, where the glass transition temperatures of the thermoplastic layers need not be reached.

The thermoplastic material layer can be comprised in a multi-layered film. This multi-layered film may have a disposable protective layer to cover the thermoplastic material layer that will take part in the joining process. Likewise, several thermoplastic material layers can be included in the film, each layer being intended for its attachment to a different thermoset component whose polymeric system is compatible with the thermoplastic material of the layer.

As explained above, the present invention covers the possibility of providing multiple first-type thermoset components which, once cured and filmed with a thermoplastic material layer by means of first-type interpenetrating networks, are placed on the second-type thermoset component. These first-type thermoset components are then strongly joined to the second-type thermoset component when the latter cures and second-type interpenetrating networks are created between the second-type thermoset component and the thermoplastic material layers.

In an example of such embodiment, an upper and a lower first-type thermoset component are provided, the filmed surface of the upper first-type thermoset component being placed on an upper surface of the second-type thermoset component and the filmed surface of the lower first-type thermoset component being placed on a lower surface of the second-type thermoset component opposite the upper surface. Thus, the final structure comprises three thermoset components, resulting from the second-type thermoset component being in between the two first-type thermoset components, and two thermoplastic material layers, each one being attached with interpenetrating networks to one of the two first-type thermoset components and to the second-type thermoset component.

An advantageous application of this embodiment is the attachment of thermoset components presenting a complex geometry, which makes the one-shot curing of the final piece difficult. The claimed method enables the individual curing and coating with the thermoplastic material layer of each of these components, which are in consequence first-type thermoset components.

Subsequently, in order to join these first-type thermoset components with an interpenetrating network between a thermoplastic and a thermoset material, and not by the thermoplastic/thermoplastic joint that would be achieved by bringing the filmed surfaces into contact, a second-type thermoset component is taken as a joining means between the first-type thermoset components. Accordingly, a pure thermoset resin is a suitable option for such second-type thermoset component playing the role of a joining means. Once the second-type thermoset component is cured, the first-type and the second-type interpenetrating networks make for a strong joint between the thermoset components.

The strength of the interfaces between the components that the methods of the present invention yields make the final products obtained by these methods adequate for the requirements of many aircraft structures.

In an example, the at least one first-type thermoset component is an aircraft stiffener and the second-type thermoset component is an aircraft skin.

The attachment between skins and stiffeners can be performed with different types of joints, such as mechanical joints, adhesives or one-shot curing of the whole assembly. All of these types of joints raise the problems explained above. With the method of the present invention, one or more aircraft stiffeners are formed by providing a starting thermoset component on which a thermoplastic material layer is placed and by curing them so as to form a first-type interpenetrating network between the first-type thermoset component, that is, the aircraft stiffener, and the thermoplastic material layer. As can be read above, this separate curing and filming of the stiffeners is a simple process which does not require expensive tooling specifically designed for it.

The filmed surface of each stiffener, coated with a thermoplastic material layer, is then placed on the uncured skin, and a second-type interpenetrating network will form when the skin is cured. Such final step can also be performed with conventional curing equipment. The assembly of the skin and the one or more stiffeners is therefore strong and achievable with conventional inexpensive equipment.

In an embodiment, a plurality of aircraft stiffeners is provided to form a grid on the aircraft skin. Such grid is formed by conveniently placing the cured stiffeners with the filmed surfaces in the desired grid-like arrangement before the curing of the skin.

T-stringers are an example of stiffener that can be manufactured this way. The uncured T-shaped stiffener constitutes the starting thermoset component on which base the thermoplastic material layer is placed. Once the T-stringers have been cured and the first-type interpenetrating network has formed between the thermoplastic material layer and the base, which constitutes the filmed surface of the cured T-stringer, this base is positioned on the uncured skin before performing the final step of the process, wherein the second-type interpenetrating network is formed during the curing of the skin.

In a further aeronautical application of the method of the invention, the at least one first-type thermoset component is an aircraft flap core and the second-type thermoset component is an aircraft flap. The structural requirements of aircraft flaps demand the addition of cores between the spars in the inner part of the flap. There are several alternatives to provide these cores - foam cores are disadvantageous because they suppose an additional weight; aluminum cores are not releasable when the structure is cured; composite cores are a beneficial option if the claimed method is followed. The composite cores are manufactured by being independently cured and filmed as any first-type thermoset component; later, the cured cores are placed on the right locations at the inside of the uncured flap and, finally, the flap is cured and the cores are strongly bonded to the flap through the interpenetrating networks that the thermoplastic material layer forms with both thermoset components. The strength of the interfaces enables the core to act as structural load bearing material. This embodiment is equally applicable to rotor blade cores as first-type thermoset components and rotor blades as second-type thermoset component.

Another application of the method permits the manufacturing of structures having thickness variations. Such structures aim at reducing weight by adapting the thickness of their different parts to the forces the structure withstands. However, since the overall geometry is more complicated than that of constant thickness structures, the manufacture of the structures is normally difficult and requires dedicated tools.

The present invention overcomes these inconveniencies by providing at least two first-type thermoset components in form of at least two thermoplastic stacks of different thickness. As in all of the above examples, these components are cured and coated with the thermoplastic material layer independently of one another.

The filmed surface of each of the at least two stacks of different thickness is then placed on a flat surface of the second-type thermoset component such that, when this second-type thermoset component is cured, the intended structure of varying thickness is obtained thanks to the appropriate location of the stacks of different thickness on the flat surface of the second-type thermoset component and to the first-type and second-type interpenetrating networks.

These and other features and advantages of the invention will become more evident from the following detailed description of preferred embodiments, given only by way of illustrative and non-limiting example, in reference to the attached figures:
Figure 1 shows a starting thermoset component before being cured.
Figure 2 depicts the first-type interpenetrating network that forms between the first-type thermoset component and the thermoplastic material layer when the former is cured.
Figure 3 illustrates an uncured second-type thermoset component.
Figure 4 shows the strong attachment between the first-type thermoset component and the second-type thermoset component due to the first-type interpenetrating network between the first-type thermoset component and the thermoplastic material layer and the second-type interpenetrating network between the second-type thermoset component and the thermoplastic material layer.
Figure 5 depicts an upper and a lower first-type thermoset components before being joined to a second-type thermoset component.

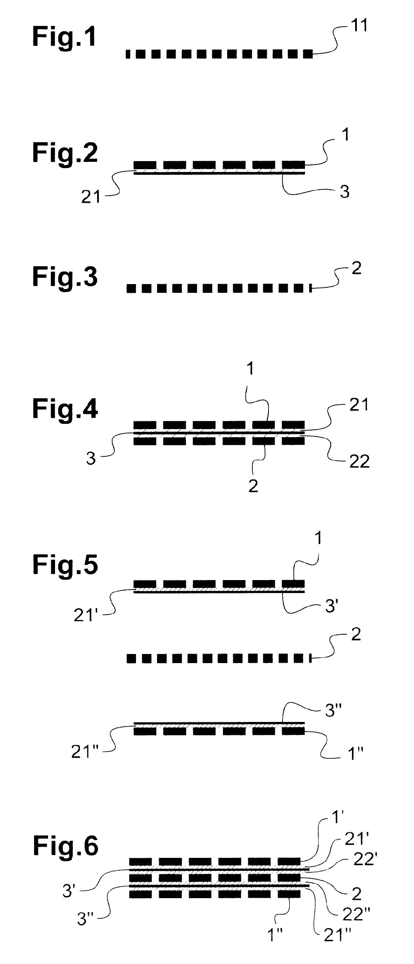

Figure 6 shows the strong attachment between the upper and the lower first-type thermoset components and the second-type thermoset component due to the upper and lower first-type interpenetrating networks respectively formed between the upper first-type thermoset component and the upper thermoplastic material layer and between the lower first-type thermoset component and the lower thermoplastic material layer, and due to the upper and lower second-type interpenetrating networks respectively formed between the upper thermoplastic material layer and the second-type thermoset component and between the lower thermoplastic material layer and the second-type thermoset component.
Figure 7 is a representation of a piece of varying thickness obtained by the method of the invention.
Figure 8 is a perspective view of an aircraft part manufactured with the method of the invention.
Figures from 9 to 12 illustrate the steps of reinforcing an aircraft skin with T-stringers using the method of the invention.
Figure 13 represents an aircraft flap reinforced with aircraft flap cores made following the method of the invention.

Figure 1 shows an uncured starting thermoset component 11 that will be used to manufacture a first-type thermoset component 1 by curing such starting thermoset component 11. Before curing, a thermoplastic material layer 3 is placed on a surface of the starting thermoset component 11, such that, when the curing takes place, a first-type interpenetrating network 21 forms between the first-type thermoset component 1 and the thermoplastic material layer 3, as is depicted in figure 2. In consequence, the first-type thermoset component 1 comprises a filmed surface coated with the thermoplastic material layer 3, the thermoplastic material being strongly joined to the thermoset polymer of the first-type thermoset component 1 due to the first-type interpenetrating network 21 of their interface.

Figure 3 illustrates an uncured second-type thermoset component 2 to be joined to the first-type thermoset component 1 of figure 2, as indicated in figure 4. A surface of the second-type thermoset component 2 and the filmed surface of the first-type thermoset component 1 are brought into contact, so that, when the second-type thermoset component 2 is cured, a second-type interpenetrating network 22 forms between the second-type thermoset component 2 and the thermoplastic material layer 3. As a result, the first-type 1 and second-type 2 thermoset components are strongly attached by means of the interpenetrating networks 21, 22.

In the embodiment of figures 5 and 6, an upper 1' and a lower 1" first-type thermoset components are joined to the second-type thermoset component 2. Each one of the upper 1' and lower 1" first-type thermoset components is obtained by curing a starting thermoset component 11, as in the previous example - likewise, before the curing, an upper 3' and a lower 3" thermoplastic material layer are each placed on a surface of the corresponding starting thermoset component 11 so that, once cured, the upper 1' and lower 1" first-type thermoset components each have a filmed surface coated with thermoplastic material respectively resulting from the formation of an upper 21' and a lower 21" first-type interpenetrating network with the upper 3' and lower 3" thermoplastic material layers.

In the present example, the filmed surface of the upper first-type thermoset component 1' is placed, before the step of curing the second-type thermoset component 2, opposite the filmed surface of the lower first-type thermoset component 1" relative to the second-type thermoset component 2, as shown in figure 6. This second-type thermoset component 2 can be used as a joining means to join already manufactured first-type thermoset components 1', 1", and it can be a pure thermoset resin. With this arrangement, when the second-type thermoset component is cured, an upper second-type interpenetrating network 22' is formed between the upper thermoplastic material 3' and the second-type thermoset component 2, and a lower second-type interpenetrating network 22" is formed between the lower thermoplastic material layer 3" and the second-type thermoset component 2.

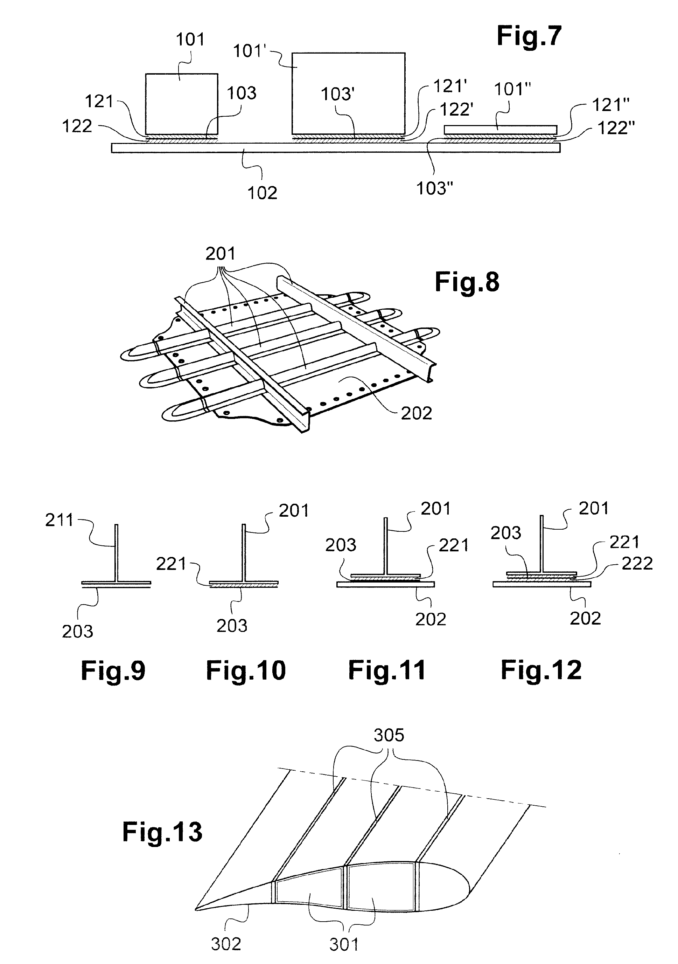

In the embodiment of figure 7, there are also several first-type thermoset components joined to the second-type thermoset component 202, but in this case they are bonded to the same surface of the second-type thermoset component 102. The first-type thermoset components are stacks of different thickness 101, 101', 101" and the surface of the second-type thermoset component 102 to which they are bonded is a flat surface. This way, the method can be an advantageous way of manufacturing a piece with regions of varying thickness.

Before joining the stacks of different thickness 101, 101', 101" to the flat surface of the second-type thermoset component 102, these stacks 101, 101', 101" undergo the same making process of any first-type thermoset component - each of the stacks 101, 101', 101" is first brought into contact with a thermoplastic material layer 103, 103', 103" and then cured so that a first-type interpenetrating network 121, 121', 121" forms between the thermoset polymer of the stacks 101, 101', 101" and the thermoplastic material of the layers 103, 103', 103".

Likewise, the step of joining of the stacks 101, 101', 101" to the second-type thermoset component 102 is carried out by placing the filmed surface of each stack 101, 101', 101" on the flat surface of the second-type thermoset component 102 and by curing this second-type thermoset component 102, thus forming second-type interpenetrating networks 122, 122', 122" between the thermoset polymer of the second-type thermoset component 102 and the thermoplastic material of the layers 103, 103', 103".

The inventive method can also be used for manufacturing aircraft parts having a skin 202 and one or more stiffeners 201 for reinforcing the skin 202, as depicted in figure 8. In such case, the process consists in first fabricating the stiffeners 201, which are first-type thermoset components, and then placing their filmed surfaces on the adequate surface of the skin 202, which constitutes the second-type thermoset component. As always, the final step comes down to curing the skin 202 for achieving the strong joint between the thermoset components.

This embodiment is detailed in figures from 9 to 12 for the example wherein the stiffeners are T-stringers 202. A starting thermoset T-stringer 211, represented in figure 9, is provided uncured, as any starting thermoset component. A thermoplastic material layer 203 is placed on a flat surface of a base of the starting thermoset T-stringer 211.

In the next step, shown in figure 10, the starting thermoset T-stringer 211 is cured, giving rise to a first-type interpenetrating network 221 that strongly joins the thermoset polymer of the T-stringer 201, which is a first-type thermoset component, and the thermoplastic material layer 203.

In the step of figure 11, the flat filmed surface of the cured T-stringer is placed on an uncured aircraft skin 202, playing the role of second-type thermoset component.

As illustrated in figure 12, when the step of curing the skin 202 is performed, a second-type interpenetrating network 222 extends between the thermoplastic material layer 203 and the thermoset polymer of the skin 202, and therefore the skin 202 is strongly attached to the T-stringer by means of the first-type 221 and second-type 222 interpenetrating networks.

In figure 13, an aircraft flap 302 reinforced with aircraft flap cores 301 is depicted. The aircraft flap cores 301 are first-type thermoset components which result from the curing of a starting thermoset component 11 in contact with a thermoplastic material layer 3. These aircraft flap cores 301, manufactured independently and without the need of expensive tools, are then placed in the appropriate position between the spars 305 of the uncured aircraft flap 302. When this aircraft flap 302 is cured, the final reinforced piece is obtained and the strength of the attachment is determined by the first-type 21 and second-type 22 interpenetrating networks.

In all the depicted embodiments, the thermoplastic material layers 3, 3', 3", 103, 103', 103", 203 maintain their original solid shape -that is, the thermoplastic materials are kept in their glassy phase- when the curing steps take place, since the first-type curing temperature or temperatures and the second-type curing temperature are inferior to the thermoplastic glass transition temperature of the thermoplastic material layer or layers 3, 3', 103, 103', 103", 203.

### References

1. - First-type thermoset component
1'. - Upper first-type thermoset component
1". - Lower first-type thermoset component
2, 102.- Second-type thermoset component
3, 103, 103', 103", 203.- Thermoplastic material layer
3'.- Upper thermoplastic material layer
3".- Lower thermoplastic material layer
11.- Starting thermoset component
21, 121, 121', 121", 221.- First-type interpenetrating network
21'.- Upper first-type interpenetrating network
21".- Lower first-type interpenetrating network
22, 122, 122', 122", 222.- Second-type interpenetrating network
22'.- Upper second-type interpenetrating network
22".- Lower second-type interpenetrating network
101; 101', 101".- Thermoset stacks of different thickness
201.- Aircraft stiffener
202.- Aircraft skin
211.- Starting thermoset T-stringer
301.- Aircraft flap core
302.- Aircraft flap
305.- Aircraft flap spar

## Claims

1. A method of joining thermoset components comprising the steps of:
- providing at least one first-type thermoset component (1 , 1', 1"; 101, 101', 101", 201, 301), each at least one first-type thermoset component (1, 1', 1"; 101, 101', 101", 201, 301) being manufactured by:
o providing a starting thermoset component (11, 211), the starting thermoset component (11, 211) being uncured,
o placing as thermoplastic material layer (3, 3', 3", 103, 103', 103", 203) on a surface of the starting thermoset component (11), the thermoplastic material layer (3, 3', 3", 103, 103', 103", 203) having a thermoplastic glass transition temperature,
o curing the starting thermoset component (11, 211) at a first-type curing temperature, thus giving rise to the first-type thermoset component (1, 1', 1"; 101, 101', 101", 201, 301) having, once cured, a filmed surface coated with the thermoplastic material layer (3, 3', 3", 103, 103', 103", 203), the thermoplastic material layer (3, 3', 3", 103, 103', 103", 203) being joined to the first-type thermoset component (1, 1', 1"; 101, 101', 101", 201, 301) by means of a first-type interpenetrating network (21, 21', 21", 121, 121', 121", 221);
- providing a second-type thermoset component (2, 102, 202, 302), the second-type thermoset component (2, 102, 202, 302) being uncured;
- placing the filmed surface of each at least one first-type thermoset component (1, 1', 1"; 101, 101', 101", 201, 301) on the second-type thermoset component (2, 102, 202, 302);
- curing the second-type thermoset component (2, 102, 202, 302) at a second-type curing temperature, so that a second-type interpenetrating network (22, 22', 22", 122, 122', 122", 222) is created between the second-type thermoset component (2, 102, 202, 302) and each at least one thermoplastic material layer (3, 3', 3", 103, 103', 103", 203), thereby joining each at least one first-type thermoset component (1, 1', 1"; 101, 101', 101", 201, 301) with the second-type thermoset component (2, 102, 202, 302).

2. The method of claim 1, wherein, during the manufacturing of each at least one first-type thermoset component (1, 1', 1"; 101, 101', 101", 201, 301), the first-type curing temperature is less than the thermoplastic glass transition temperature of the thermoplastic material layer (3, 3', 3", 103, 103', 103", 203); and wherein the second-type curing temperature is less than the thermoplastic glass transition temperature of each at least one thermoplastic material layer (3, 3', 3", 103, 103', 103", 203).

3. The method of claims 1 or 2, wherein the at least one first-type thermoset component (1, 1', 1"; 101, 101', 101", 201, 301) and/or the second-type thermoset component (2, 102, 202, 302) are composite materials.

4. The method of claim 3, wherein the at least one first-type thermoset component (1 , 1', 1"; 101, 101', 101", 201, 301) and/or the second-type thermoset component (2, 102, 202, 302) are carbon fibre reinforced polymers.

5. The method of claims 3 or 4, wherein the starting thermoset component (11, 211) of the at least one first-type thermoset component (1, 1', 1"; 101, 101', 101", 201, 301) and/or the uncured second-type thermoset component (2, 102, 202, 302) are provided in form of uncured prepreg.

6. The method of claims 3 or 4, wherein the starting thermoset component (11, 211) of the at least one first-type thermoset component (1, 1', 1"; 101, 101', 101", 201, 301) and/or the uncured second-type thermoset component (2, 102, 202, 302) are manufactured by using liquid composite moulding.

7. The method of any one of claims from 1 to 6, wherein the thermoplastic material of the thermoplastic material layer (3, 3', 3", 103, 103', 103", 203) is an amorphous thermoplastic.

8. The method of claim 7, wherein the amorphous thermoplastic is one of polyetherimide (PEI), polysulfone (PSU), polyether sulfone (PES), Poly(methyl methacrylate) (PMMA) or polycarbonate (PC).

9. The method of any one of claims from 1 to 8, wherein the thermoplastic material layer (3, 3', 3", 103, 103', 103", 203) is provided in a multi-layered film.

10. The method of any one of claims from 1 to 9, wherein an upper (1') and a lower (1") first-type thermoset components are provided, the filmed surface of the upper first-type thermoset component (1') being placed on an upper surface of the second-type thermoset component (2) and the filmed surface of the lower first-type thermoset component (1") being placed on a lower surface of the second-type thermoset component (2) opposite the upper surface.

11. The method of claim 10, wherein the second-type thermoset component (2) is a pure thermoset resin.

12. The method of any one of claims from 1 to 11, wherein the at least one first-type thermoset component is an aircraft stiffener (201) and the second-type thermoset component is an aircraft skin (202).

13. The method of claim 12, wherein the aircraft stiffener (201) is a T-stringer.

14. The method of any one of claims from 1 to 11, wherein the at least one first-type thermoset component is an aircraft flap core (301) and the second-type thermoset component is an aircraft flap (302).

15. The method of any one of claims from 1 to 11, wherein at least two first-type thermoset components are provided in form of at least two stacks of different thickness (101, 101', 101") and the filmed surfaces of the at least two stacks of different thickness (101, 101', 101") are placed on a flat surface of the second-type thermoset component (102).
